**Europäisches Patentamt**

**European Patent Office**

**Office européen des brevets**

(11) Veröffentlichungsnummer: **0 019 036**
**B1**

(12) **EUROPÄISCHE PATENTSCHRIFT**

(45) Veröffentlichungstag der Patentschrift: **28.11.84**

(21) Anmeldenummer: **80100634.7**

(22) Anmeldetag: **07.02.80**

(51) Int. Cl.³: **B 65 H 29/50, B 65 H 31/30, B 65 H 9/16, B 65 G 57/112, B 42 C 19/08**

(54) **Vorrichtung zum Stapeln von quaderförmigen Produkten, insbesondere von quaderförmigen Druckerzeugnissen, Zeitschriften oder dergleichen.**

(30) Priorität: **22.05.79 DE 2920667**

(43) Veröffentlichungstag der Anmeldung:
**26.11.80 Patentblatt 80/24**

(45) Bekanntmachung des Hinweises auf die
Patenterteilung:
**28.11.84 Patentblatt 84/48**

(84) Benannte Vertragsstaaten:
**AT BE CH FR GB IT LU NL SE**

(56) Entgegenhaltungen:
**DE-A-1 933 341**
**DE-A-2 416 825**
**DE-A-2 432 579**
**DE-A-2 612 867**
**DE-A-2 639 332**
**DE-A-2 729 222**
**DE-A-2 747 799**
**DE-A-2 815 829**
**DE-A-2 901 264**
**DE-B-1 786 261**
**US-A-3 776 404**
**US-A-4 099 712**

(73) Patentinhaber: **Reinhard Mohn GmbH**
**Carl-Bertelsmann-Strasse 161**
**D-4830 Gütersloh 1 (DE)**

(72) Erfinder: **Kwauka, Gerd-Georg, Dr. Dipl.-Ing.**
**Sebastianweg 15**
**D-4830 Gütersloh 11 (DE)**
Erfinder: **Kohn, Ulrich**
**Frankenweg 5**
**D-4800 Bielefeld 11 (DE)**
Erfinder: **Wenzke, Peter**
**Piusstrasse 49**
**D-4830 Gütersloh 1 (DE)**

(74) Vertreter: **Patentanwälte Dr. Solf & Zapf**
**Schlossbleiche 20 Postfach 13 01 13**
**D-5600 Wuppertal 1 (DE)**

Courier Press, Leamington Spa, England.

## Beschreibung

Die Erfindung betrifft eine Vorrichtung zum kontinuierlichen Stapeln von quaderförmigen Produkten von oben nach unten, wobei Produkte zum Stapeln aufeinandergelegt werden und der Stapel abgepackt und ausgestoßen wird, mit einer Transportvorrichtung, auf der die Produkte hintereinanderliegend kontinuierlich antransportiert, anschließend auf einer schiefen Ebene nach oben weiter transportiert und am Ende der schiefen Ebene gestapelt werden, wobei die Transporthöhe der schiefen Ebene durch Schwenken entsprechend der jeweiligen Stapelhöhe verändert wird.

Mit den Begriffen "Druckerzeugnisse, Zeitschriften oder dergleichen" sollen im Rahmen der Erfindung alle die Erzeugnisse bezeichnet werden, die im Druckereibetrieb an irgendeiner Stelle zu stapeln sind. Insbesondere umfassen die Begriffe Buchblocks, Bücher, Zeitschriften, Bogenbündel oder dergleichen. In der folgenden Beschreibung wird daher für den umfassenden Begriff "quaderförmige Produkte" das Wort "Buchblock" verwendet.

Aus der DE—OS 24 16 825 ist ein Gerät zum Stapeln von Werkstükken bekannt, das ein Transportband aufweist, dessen zum Stapel hingerichtetes Ende innerhalb des vertikalen Verfahrbereiches immer den gleichen Abstand zu den aufgestapelten Werkstücken aufweist. Hierzu muß beim vertikalen Verfahren des Transportbandes ein horizontales Nachführen erfolgen, was bei diesem bekannten Gerät mittels einer Kulissenführung und mehreren Hebelgetrieben und Lenkersystemen erzielt wird. Das bekannte Gerät ist daher aufgrund seines sehr komplizierten und aufwendig ausgeführten konstruktiven Aufbaues relativ kostspielig.

Der Erfindung liegt daher die Aufgabe zugrunde, eine Vorrichtung der eingangs genannten Art anzugeben, die bei einem einfache und kostengünstigen Aufbau bei einer Höhenverschwenkung immer den gleichen horizontalen Abstand zu den gestapelten Produkten aufweist und damit eine präzise Stapelung ermöglicht.

Diese Aufgabe wird erfindungsgemäß dadurch gelöst, daß die schiefe Ebene von einem Stapelband gebildet wird, das in Transportrichtung dadurch verlängerbar ausgeführt ist, daß ein die Umlenkrollen tragendes Bandgestell ausziehbar ausgebildet ist, eine Bandlose zur nachgiebigen Aufrechterhaltung der Bandspannung vorgesehen ist, und daß das höhenverstellbare Ende des Bandgestells an einer Hebevorrichtung angelenkt ist, wobei die Anlenkstelle vertikal geführt ist.

Weitere Ausbildungen der Erfindung sind aus den abhängigen Ansprüchen zu entnehmen. Durch diese einfache und somit kostengünstige konstruktive Ausgestaltung wird bei einem vertikalen Verfahren der Hebevorrichtung das Bandgestell aus- oder eingefahren, so daß das höhenverstellbare Ende des Stapelbandes immer den gleichen horizontalen Abstand zu den aufgestapelten Produkten besitzt. Die Transporthöhe der schiefen Ebene wird dabei derart verändert, daß sie der jeweiligen Stapelhöhe entspricht.

Bei dem Stapelvorgang ist insbesondere die Herstellung von Stapelmustern und/oder Doppelstapeln vorgesehen. Zu diesem Zweck werden die einzelnen Buchblocks vor dem Transport nach oben gewendet. Dabei kann das Wenden programmgesteuert erfolgen, so daß beispielweise jeder zweite, dritte, vierte oder fünfte Buchblock gewendet wird, so daß sich ein Stapelmuster ergibt. Zur Herstellung eines Doppelstapels werden die in einer Reihe antransportierten einzelnen Buchblocks derart gewendet, daß der Blockrücken parallel zur Transportebene ausgerichtet ist. Die Buchblocks können dabei mit den Buchblockrücken nach vorne weisend in abwechselnder Folge nach links und nach rechts bzw. umgekehrt gewendet werden, so daß sie parallel und versetzt zueinander ausgerichtet sind. Dabei beträgt der Versatz vorzugsweise eine Buchblockbreite, wodurch erreicht wird, daß jeweils zwei aufeinanderfolgende Buchblocks eine Lage eines Doppelstapels bilden können.

Anhand der Zeichnung wird die Erfindung beispielhaft näher erläutert. Dabei wird die Vorrichtung in bezug auf das Doppelstapeln beschrieben. Die Erfindung eignet sich jedoch in gleicher Weise zur Herstellung von Einzelstapeln und von Stapelmustern. Es zeigen:

Fig. 1 eine Aufsicht auf einen Teil einer Anlage zur Herstellung von Schriftgutblocks unter Einschluß der erfindungsgemäßen Stapelvorrichtung,

Fig. 2 eine Aufsicht auf eine Prinzipdarstellung einer erfindungsgemäßen Vorrichtung,

Fig. 3 eine Seitenansicht auf die Vorrichtung gemäß Fig. 2,

Fig. 4 eine Seitenansicht eines Stapelbandes der erfindungsgemäßen Vorrichtung,

Fig. 5 eine Aufsicht auf ein Umlenkband der erfindungsgemäßen Stapelvorrichtung,

Fig. 6 eine Aufsicht auf eine Einschubeinrichtung, ein Pufferband und eine Ausstoßeinrichtung einer erfindungsgemäßen Stapelvorrichtung.

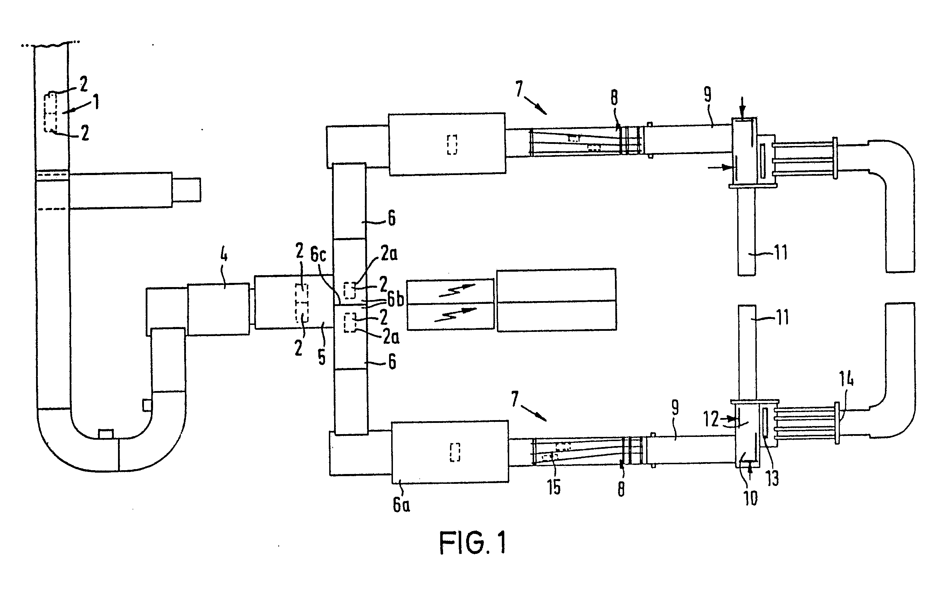

In Fig. 1 ist eine Stapelvorrichtung dargestellt, die einer Buchblockstraße nachgeordnet ist. Die gehefteten oder gebundenen Buch-, Kalender-, Zeitschriften—Blocks 1, die z.B. aus zwei noch miteinander verbundenen Einzelblocks bestehen können, werden auf einem Band 3 zu einer Säge 4 transportiert und dort voneinander getrennt, so daß einzelne Buchblocks entstehen. Der Säge 4 kann ein Wendeband 5 nachgeordnet sein, auf dem die getrennten Buchblocks 2 ausgerichtet und/oder gewendet werden. Danach werden die Buchblocks 2 vereinzelt indem sie auf Transportbänder 6 je einer erfindungsgemäßen Stapelvorrichtung 7 zugeführt werden. Die Transportbänder 6 sind vorzugsweise rechtwinklig vor dem Wendeband 5 angeordnet, wobei sich ihre Einlaufseiten 6b gegenüberliegen und die Trennfuge 6c etwa in der Längsmitte des Wendebands 5 liegt. Die beiden Transportbänder 6 laufen gegensinnig. Die paarweise aus der Säge 4 kommenden Buchblocks 2 werden auf dem Wendeband 5 so ausgerichtet und/oder gewendet, daß je ein Buchblock auf ein Transportband 6 geleitet wird, wobei beispielsweise die Rücken 2a nach vorne weisen und die Kopfschnitte 2b sich gegenüberliegen. Selbstverständlich kann aber auch jede andere gewünschte Lage der beiden Buchblocks auf dem Wendeband 5 herbeigeführt werden. Nach einer wiederum rechtwinkligen Umlenkung werden die Buchblocks 2 in einem Trimmer 6a transportiert, wo sie in bekannter Weise beschnitten werden. Dann werden sie an die eigentliche Stapelvorrichtung 7 übergeben. Diese Stapelvorrichtung 7 besteht aus einem Umlenkband 8, einem erfindungsgemäß ausgebildeten Stapelband 9, einer Einschubeinrichtung 10, einem Pufferband 11 und einer Ausstoßeinrichtung 12. An die Ausstoßeinrichtung 12 ist eine an sich bekannte Verpackungsmaschine 13 und an diese eine an sich bekannte Abnahmebahn 14 angeschlossen.

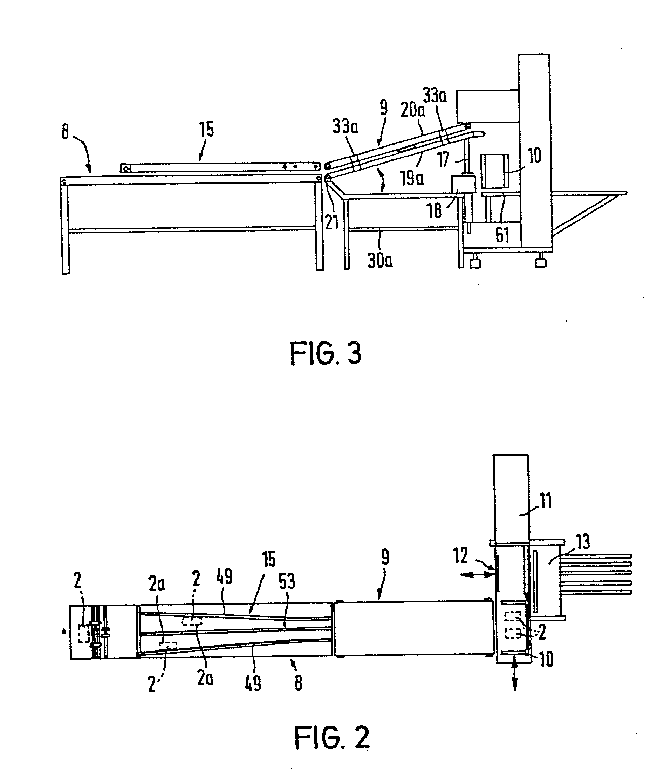

Die vorzugsweise mit dem Buchblockrücken 2a, der rechtwinklig zur Transportrichtung in der Transportebene ausgerichtet ist, voran in Reihe antransportierten Buchblocks 2 werden auf dem Umlenkband 8 mittels einer Umlenkvorrichtung 15 vorzugsweise zur Herstellung eines Doppelstapels derart umgelenkt, daß die Buchblockrücken 2a nach der Umlenkung parallel zur Transportrichtung liegen (Fig. 2). Dabei kann die Umlenkung vorteilhafterweise auch derart erfolgen, daß die aufeinanderfolgenden Buchblocks 2 abwechselnd nach links und nach rechts bzw. umgekehrt um 90° umgelenkt bzw. in der Transportebene gewendet werden, so daß die Blockrücken aufeinanderfolgender Buchblocks sich gegenüberliegen oder zueinander abgewandt sind. Auf diese Weise kann zwischen aufeinanderfolgenden Buchblocks eine seitliche Versetzung, vorzugsweise um eine Buchblockbreite, entstehen. Diese Umlenkung und seitliche Versetzung ist für die spätere Stapelung zu Doppelstapeln besonders günstig; denn dadurch kann jede Stapellage aus zwei Einzelblocks gebildet werden, deren Blockrücken jeweils eine Außenseite der Stapellage bilden.

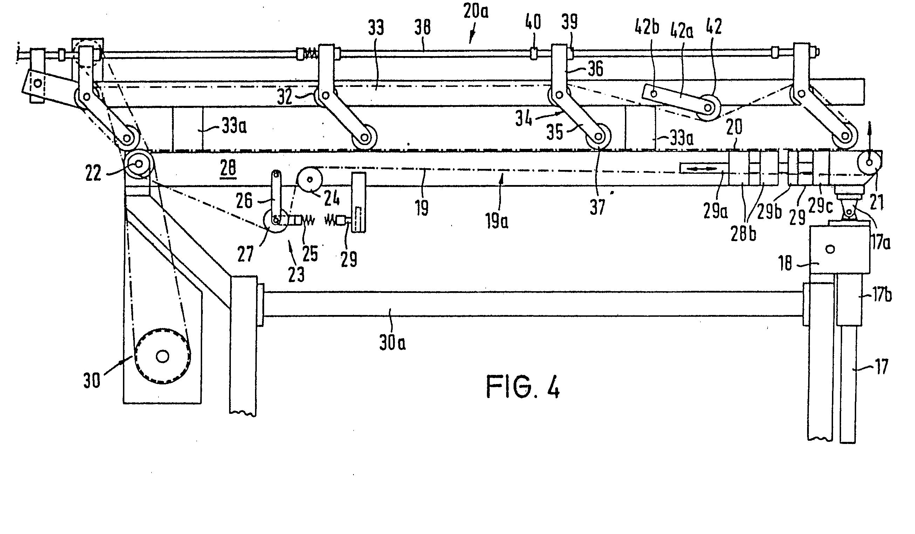

Das Stapelband 9 ist dem Umlenkband 8 nachgeordnet und kann nach oben zur schiefen Ebene geschwenkt werden (Fig. 3), so daß das Stapeln der Einzelblocks 2 von oben nach unten erfolgt. Hierzu ist das Stapelband 9 in seinem Neigungswinkel, und zwar vorzugsweise stufenlos, verstellbar, so daß die Transporthöhe am Bandende jeweils der Höhe des sich bildenden Stapels angepaßt werden kann. Die Höhenverstellung erfolgt vorzugsweise mittels einer Zahnstange 17, die von einem Motor 18 angetrieben wird, wobei der Kopf der Zahnstange mit dem Ende des Stapelbandes 9 vorzugsweise schwenkbar verbunden ist. Als Motor 18 kann zweckmäßigerweise ein Gleichstrommotor oder ein polumschaltbarer Bremsmotor zum stoßfreien Anheben des Bandendes verwendet werden. Der Aufbau des Stapelbandes ergibt sich aus Fig. 4. Das Stapelband 9 besteht aus der Unterbandanlage 19a und der Oberbandanlage 20a, wobei das Rollenbahngestellt 28 mit dem Rollenbahngestell 33 über Verstrebungen 33a in Verbindung steht. Die Rollenbahnanlage 19a ruht vorderendig in der Achse 22 schwenkbar auf einem Maschinengestell 30a und ruht anderendig auf dem schwenkbar an der Zahnstange 17 angeordneten Zahnstangenkopf 17a, wobei die Zahnstange 17 in einer Führung 17b geführt wird, die am Maschinengestell 30a angeordnet ist. Das Stapelband 9 weist ein Unterband 19 und ein Oberband 20 auf. Beide Bänder sind als Endlosbänder ausgebildet. Das Unterband 19 verläuft an den beiden Enden des Stapelbandes 9 jeweils über eine Umlenkrolle 21, 22. Hierbei bildet die Umlenkrolle 21 das in der Höhe verstellbare Auslaufende des Stapelbandes 9. Gemäß der Erfindung ist das Stapelband 9 in Transportrichtung verlängerbar ausgeführt, so daß die Rolle 21 der Rollenbahnanlage 19a beim Verfahren des Bandes zur schiefen Ebene in einer vertikalen Ebene nach oben versetzt werden kann. Auf diese Weise bleibt der horizontale Abstand des Bandendes des Stapelbandes 9 zur Stapelvorderkante bzw. zur Stapelschachtöffnung konstant. Die mit der Höhenverstellbarkeit des Bandendes korrespondierende Längenverstellbarkeit der Rollenbahnlage 19a bzw. Längenverstellbarkeit des Unterbandes 19 wird mittels einer Bandlose 23 erzielt, die aus einer feststehenden Umlenkrolle 24 und einer gegen die Federkraft einer Feder 25 schwenkbar an einem Schwenkhebel 26 gelagerten Umlenkrolle 27 besteht. Der Schwenkhebel 26 und die Umlenkrolle 24 sind ihrerseits im Rollenbahngestell 28 gelagert. Die Zugkraft der Zugfeder 25 ist mittels einer ebenfalls am Rollenbahngestell 28 angeordneten Spanneinrichtung 29 einstellbar. Des weiteren ist das Unterbandgestell 28 vorzugsweise im Bereich der Umlenkrolle 21 unterteilt bzw. getrennt ausgeführt, und zwar derart, daß der die Umlenkrolle 21 aufnehmende Gestellabschnitt 29 innerhalb des Gestells 28 in Längsrichtung hin- und herverschiebbar gelagert ist, wie durch den eingezeichneten Doppelpfeil angedeutet wird. Beispielsweise kann diese Lagerung mit einer oder mehreren Stangen 29a erfolgen, die in entsprechenden Bohrungen der Blöcke 29b und 28b gleiten können und z.B. im Block 29c fest angeordnet sind. Mit diesen Mitteln gelingt es auf einfache Weise, eine Längung der Transportebene des Stapelbandes 9 entsprechend der Höhenverstellung zu gewährleisten, so daß die Rolle 21 in einer vertikalen Ebene nach oben bzw. nach unten wandern kann. Vorzugsweise wird dabei die Umlenkrolle 22 z.B. mittels eines an sich bekannten Kettenantriebes 30 angetrieben, der am Maschinengestell 30a lagern kann.

Das Oberband 20 läuft einerseits über Rollen 32, die in einem mit dem Gestell 28 über Streben 33a verbundenen Rahmengestell 33 in bestimmten Abständen hintereinander gelagert sind. In den Lagerpunkten dieser Rollen 32 sind vorzugsweise paarweise beidseitig Winkelhebel 34 schwenkbar gelagert, deren beide Schenkel 35, 36 einen vorzugsweise stumpfen Winkel bilden. Der in Richtung auf das Unterband weisende Schenkel 35 dient endseitig zur Lagerung einer Bandrolle 37, und der andere Schenkel 36 ist endseitig auf einer Führungsstange 38 verschiebbar geführt. Dabei wird seine Lage auf der Führungsstange 38 durch Stellringe 39, 40 festgelegt. Durch Versetzung des Schenkels 36 auf der Führungsstange 38 kann der Abstand der Bandrollen 37 vom Unterband 19 und damit der Abstand zwischen Ober- und Unterband eingestellt werden, und zwar entsprechend der Dicke der zu stapelnden Buchblocks. Indem zwischen dem Stellring 40 und dem Schenkel 36 einen Druckfeder angeordnet ist, besteht für die Bandrollen 37 die Möglichkeit, nach oben im Sinne einer Abstandsvergrößerung federnd auszuweichen, wodurch gewisse Dickentoleranzen der Buch-blocks ausgeglichen werden können. Mittels einer Spannrolle 42, die an einem bei 42b schwenkbar im Rahmengestell 33 federbelsateten gelagerten Hebel 42a angeordnet ist, kann die Bandspannung des Oberbandes reguliert werden. Der Antrieb des Oberbandes 20 ist vorzugsweise mit dem Antrieb des Unterbandes 19 gekoppelt.

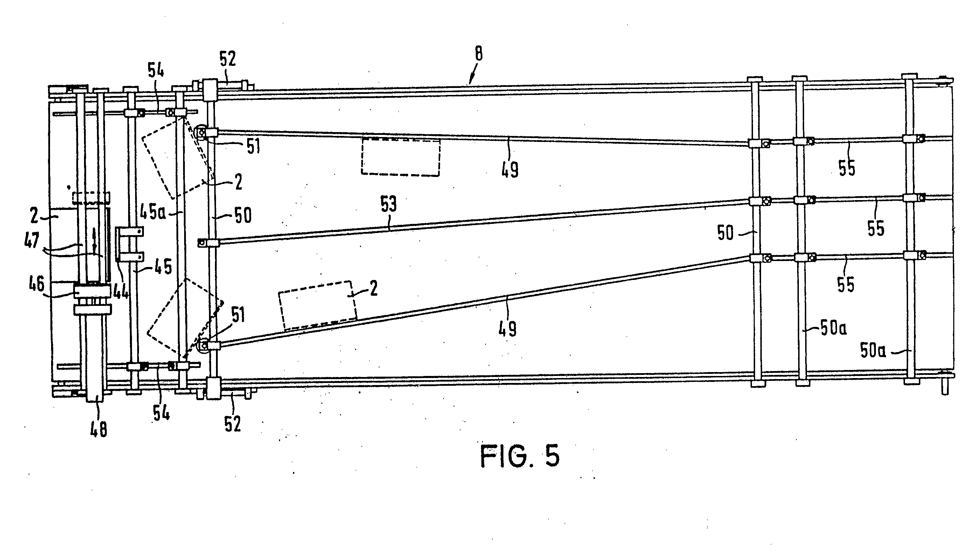

Wie sich aus Fig. 5 ergibt, besteht die Umlenkvorrichtung 15 vorzugsweise aus einem quer zur Transportrichtung in Transportebene rechtwinklig zu dieser angeordneten Anschlagblech 44. Dieses Ansschlagblech 44 ist oberhalb der Transportebene angeordnet und ragt senkrecht nach unten bis über die Transportbandoberfläche. Das Anschlagblech 44 ist auf einem Tragarm 45 verschiebbar befestigt. Vor dem Anschlagblech 44 ist ein Schieberblech 46 vorgesehen, das auf zwei parallel zum Tragarm 45 angeordneten Führungsstangen 47 verschiebbar gelagert ist und mittels einer Zylinderkolbeneinheit 48 in Richtung des eingezeichneten Doppelpfeils verschiebbar ist. In Transportrichtung hinter dem Anschlagblech 44 ist im Bereich der Längsränder des Wendebandes 8 je eine Führungsleiste 49 angeordnet. Diese Führungsleisten 49 sind endseitig auf parallel zum Tragarm 45 angeordneten Stangen 50 gelagert und auf diesen quer zur Transportrichtung verschiebbar angeordnet. Das in Transportrichtung vordere Ende der Führungsstangen 49 trägt jeweils eine waagerecht angeordnete Umlenkrolle 51. Weiterhin wird die Stange 50 mit seitlich angeordneten Stangen 52 geführt, so daß ihre Lage in Transportrichtung vor- und zurückverstellt werden kann, und damit wird auch die Lage der Umlenkrollen 51 entsprechend in Transportrichtung verlagert, was bei der Winkelverstellung der Leisten 49 erforderlich wird. Zwischen den beiden Führungsleisten 49 ist außerdem eine Trennungsleiste 53 vorgesehen, deren Enden ebenfalls auf den Stangen 50 gelagert und geführt werden. Im Anschluß an die Führungsleisten 49 sind parallel zu den Längskanten des Umlenkbandes 8, jedoch über dem Band, mehrere Seitenwände 55 vorgesehen, die parallel zueinander, im Abstand voneinander und seitlich verstellbar auf den parallel zu den Stangen 50 angeordneten Stangen 50a sitzen.

Die Arbeitsweise des Umlenkbandes ist folgende:

Ein z.B. mit dem Buchblockrücken nach vorne liegender Einzelblock 2 läuft etwa mittig auf dem Umlenkband 8 gegen das Anschlagblech 44. Nach erfolgtem Anschlag wird der Einzelblock 2 mittels des Schieberblechs 46 im dargestellten Beispiel von der mit durchgezogener Linie dargestellten Stellung des Schieberblechs 46 in die gestrichelt einge-zeichnete Stellung des Schieberblechs ver-setzt, wobei der Buchblock gegen die Anschlag- und Führungsleiste 54 stößt und dadurch genau positioniert wird. Je eine Anschlag- und Führungsleiste 54 ist rechts- und linksseitig parallel zu den Längsrändern des Bandes 8 seitlich verschiebbar auf den beiden hintereinander angeordneten Tragarmen 45 und 45a gelagert. Beim Weitertransport nimmt der Buchblock 2 die am linken Rand des Umlenkbandes 8 eingezeichnete Stellung ein, indem er mit seinem Rücken außermittig gegen die Umlenkrolle 51 anschlägt, dadurch um diese herum umgelenkt wird und dann—wie ebenfalls gestrichelt eingezeichnet ist—mit dem Rücken nach außen, also um 90° gewendet, weitertransportiert wird, wobei er entlang der zugeordneten Führungsleiste 49 gleitet. Kommt nun der nächste Einzelblock zum Anschlag gegen das Anschlagblech 44, so verschiebt sich das Schieberblech 46 von der gestrichelt eingezeichneten Stellung in die in durchgehenden Linien eingezeichnete Stellung nach rechts, so daß der Buchblock 2 gegen die rechte Anschlagleiste 54 verschoben wird und beim Weitertransport die an der rechten Längsseite des Umlenkbandes eingezeichnete Stellung einnimmt, wobei der Buchblock dort wiederum mit dem Rücken aussermittig gegen die Umlenkrolle 51 stößt und um 90° umgelenkt wird, so daß er mit seinem Buchblockrücken nach außen weisend weitertransportiert wird entlang der rechtsseitig angeordneten Führungsleiste 49. Die Führungsleisten 49 sind derart eingestellt, daß an ihrem Auslaufende die beiden jeweils aufeinanderfolgenden Buchblocks parallel, jedoch seitlich zueinander, vorzugsweise um eine Buchblockbreite versetzt, auslaufen.

Mittels der Trennungsleiste 53 wird die besonders exakte Ausrichtung der Buchblocks zueinander am Auslaufende gewährleistet. Zusätzlich sind am Auslaufende im Anschluß an die Führungs- und Trennungsleiste noch Parallelführungen 55 angeordnet, so daß dort eine Verschiebung der Einzelblocks zueinander nicht mehr erfolgen kann, sondern diese genau ausgerichtet vom Umlenkband ablaufen und in dieser Lage vom Stapelband 9 übernommen werden.

Sollen beispielsweise Zeitungen als Einzelstapel mit dem Umlenkband gemäß der Erfindung umgelenkt werden, so kann die mittlere Trennungsleiste entfernt werden, und es können die auslaufseitigen Enden der Führungsleisten auf die Zeitschriftenbreite eingestellt werden. In diesem Fall erfolgt vorzugsweise eine Stapelung, bei der die Rücken aufeinanderfolgender Zeitschriften jeweils um 180° gewendet angeordnet sind. Diese Anordnung der Zeitschriftenrücken—das Stapelmuster—wird—wie im vorstehenden beschrieben—mittels der Wendevorrichtung, im wesentlichen bestehend aus Schieberblech, Anschlagblech und Umlenkrollen, erreicht.

Der Austrittsbereich des Umlenkbandes 8, der durch die Anordnung der Führungen 55 bestimmt wird, ist stets derart eingestellt, daß er genau auf die Einschubeinrichtung 10 ausgerichtet ist.

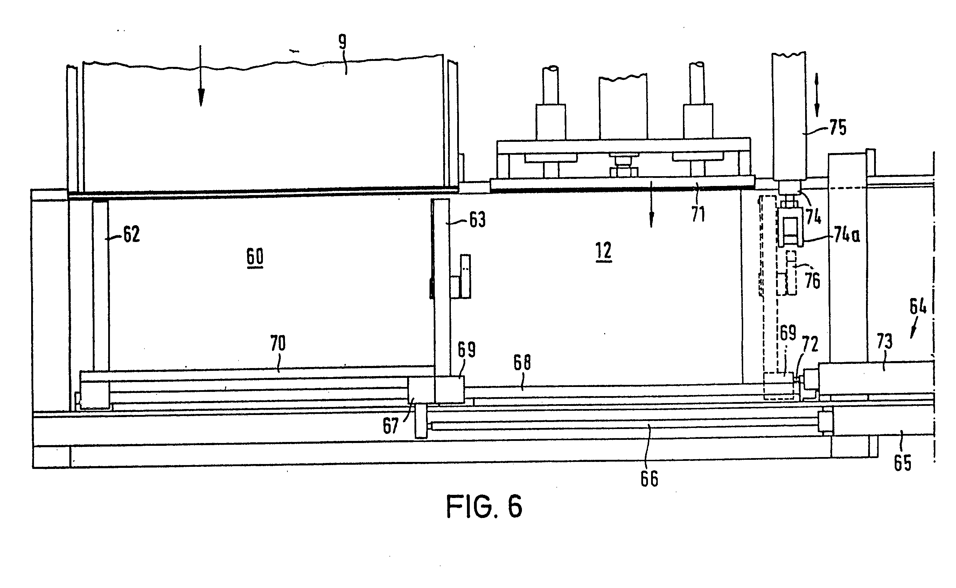

Wie sich insbesondere aus Fig. 6 ergibt, besteht die Einschubeinrichtung 10 aus einem zum Stapelband 9 hin geöffneten, im übrigen dreiseitig geschlossenen Stapelschacht 60. Der Stapelschacht wird nach unten hin durch eine Bodenplatte 61—Fig. 3—begrenzt. An diese schließt sich quer zur Transportrichtung (Pfeil in Fig. 6) die Ausstoßeinrichtung 12 und das Pufferband 11 an. Die beiden Seitenwände 62, 63 sind seitlich verschiebbar angeordnet, damit der fertiggestapelte Blockstapel in die Ausstoßeinrichtung seitlich quer zur Transportrichtung verschoben werden kann. Hierzu werden die beiden Seitenwände 62, 63 mittels einer Verschiebeeinrichtung 64 seitlich verschoben, indem mit einer Kolbenzylinderanordnung 65 einen Kolbenstange 66 angezogen wird, die mit einem Verbindungsstück 67 auf einer Führungsstange 68 gelagert ist. Das Verbindungsstück 67 liegt gegen ein Führungsteil 69 der Seitenwand 63 an, mit dem diese verschiebbar auf der Führungsstange 68 geführt wird. Das Verbindungsstück 67 ist über eine Verbindungsstange 70, die als Abstandhalter dient, fest mit der Seitenwand 62 verbunden, die auf der Führungsstange 68 ebenfalls verschiebbar gelagert ist.

Um den im Stapelschacht befindlichen Stapel in die Ausstoßeinrichtung 12 zu verschieben, wird die Kolbenstange 66 mit der Kolbenzylinderanordnung 65 angezogen, wodurch die beiden Seitenwände 62, 63 in Richtung auf den Zylinder 65 in die Endstellung unter Mitnahme des Blockstapels verschoben werden. Die Bewegungsübertragung für die gleichzeitige Verschiebung der beiden Seitenwände 62, 63 erfolgt über die Kolbenstange 66 und das Verbindungsstück 67 und von dort sowohl über die Verbindungsstange 70 auf die Seitenwand 62 als auch auf das Führungsstück 69 der Seitenwand 63. Nach dem Verschieben in die Ausstoßeinrichtung 12 wird der Stapel mittels eines Schiebers 71 in Pfeilrichtung ausgestoßen. Gleichzeitig fährt die Seitenwand 62 wieder in ihre ursprüngliche Lage zurück, indem die Kolbenstange 66 wieder ausgefahren wird. Hierbei erfolgt keine Mitnahme der Seitenwand 63, da diese nicht fest mit dem Verbindungsstück 67 verbunden ist. Sobald der Blockstapel ausgeschoben ist, wird die Seitenwand 63 mittels einer Kolbenstange 72 einer Kolbenzylinderanordnung 73, in die Stapelstellung zurückgeschoben, bis sie wieder an dem Verbindungsstück 67 anliegt. Um den Blockstapel im Bedarfsfall auf ein Pufferband schieben zu können, ist die Seitenwand 63 nach oben verschwenkbar im Führungsteil 69 gelagert. Die Verschwenkung erfolgt mittels einer Kolbenstange 74 einer parallel zur Ausstoßeinheit 71 angeordneten Kolbenzylindereinheit 75, die mit einem Gabelarmende 74a beim Ausfahren des Kolbens 74 in einen Schwenkhebel 76 an der Seitenwand 63 eingreift und diese dadurch nach oben verschwenkt wird, so daß der Weg zum Pufferband freigegeben wird. Durch Zurückziehen der Kolbenstange 74 kann die Seitenwand 63 wieder in ihre waagerechte Stellung zurückschwenken, wonach sie dann mit der Kolbenstange 72, die nicht fest mit dem Gleitstück 69 verbunden ist, in ihre Stapelstellung zurückgefahren wird. Alle Funktionsteile arbeiten derart zusammen, daß der Material- bzw. Buchblockfluß nicht unterbrochen zu werden braucht. Dies wird u.a. auch dadurch erreicht, daß die Seitenwand 62 unabhängig von der Seitenwand 63 in die Stapelstellung zurückfahrbar angeordnet ist.

**Patentansprüche**

1. Vorrichtung zum kontinuierlichen Stapeln von quaderförmigen Produkten von oben nach unten, wobei Produkte zum Stapeln aufeinandergelegt werden und der Stapel abgepackt und ausgestoßen wird, mit einer Transportvorrichtung, auf der die Produkte hintereinanderliegend kontinuierlich antransportiert, anschließend auf einer schiefen Ebene nach oben weitertransportiert und am Ende der schiefen Ebene gestapelt werden, wobei die Transporthöhe der schiefen Ebene durch Schwenken entsprechend der jeweiligen Stapelhöhe veränder wird, dadurch gekennzeichnet, daß die schiefe Ebene von einem Stapelband (9) gebildet wird, das in Transportrichtung dadurch verlängerbar ausgeführt ist, daß ein die Umlenkrollen (21, 22) tragendes Bandgestell (28) ausziehbar ausgebildet ist, eine Bandlose (23) zur nachgiebigen Aufrechterhaltung der Bandspannung vorgesehen ist und daß das höhenverstellbare Ende des Bandgestells (28) an einer Hebevorrichtung (17, 18) angelenkt ist, wobei die Anlenkstelle vertikal geführt ist.

2. Vorrichtung nach Anspruch 1, dadurch gekennzeichnet, daß die Höhenverstellung mittels einer Zahnstange (17) erfolgt, die von einem Motor (18) angetrieben wird, wobei der Kopf der Zahnstange mit dem Ende des Stapelbandes (9) schwenkbar verbunden ist.

3. Vorrichtung nach Anspruch 1 und/oder 2, dadurch gekennzeichnet, daß das Stapelband (9) aus der Unterbandanlage (19a) und der Oberbandanlage (20a) besteht, wobei das Rollenbahngestell (28) mit dem Rollenbahngestell (33) über Verstrebungen (33a) in Verbindung steht, und die Unterbandanlage (19a) vorderendig in der Achse (22) schwenkbar auf einem Maschinengestell (30a) und anderendig auf dem schwenkbar an der Zahnstange (17) angeordneten Zahnstangenkopf (17a) ruht, wobei die Zahnstange (17) in einer Führung (17b) geführt wird, die am Maschinengestell (30a) angeordnet ist.

4. Vorrichtung nach einem oder mehreren der Ansprüche 1 bis 3, dadurch gekennzeichnet, daß die Bandlose (23) aus einer feststehenden Umlenkrolle (24) und einer gegen die Federkraft einer Feder (25) schwenkbar an einem Schwenkhebel (26) gelagerten Umlenkrolle (27) besteht, der Schwenkhebel (26) und die Umlenkrolle (24) im Rollenbahngestell (28) gelagert sind, das Unterbandgestell (28) vorzugsweise im Bereich der höhenveränderlichen Umlenkrolle (21) unterteilt ausgeführt ist, und zwar derart, daß der die Umlenkrolle (21) aufnehmende Gestellabschnitt (29) innerhalb des Gestells (28) in Längsrichtung hin- und herverschiebbar gelagert ist und die Lagerung vorzugsweise mit mindestens zwei Stangen (29a) erfolgt, die in entsprechenden Bohrungen von Blöcken (29b und 28b) gleiten können und in einem Block (29c) angeordnet sind.

**Revendications**

1. Dispositif pour l'empilage en continu et de haut en bas de produits de forme parallélépipédique, les produits étant superposés pour l'empilage et la pile étant emballée et éjectée, comprenant un système de transport sur lequel les produits sont amenés en continu les uns après les autres, puis transportés vers le haut sur un plan incliné et empilés à l'extrémité du plan incliné, la hauteur de transport du plan incliné étant modifiée par pivotement en fonction de la hauteur d'empilage respective, caractérisé en ce que le plan incliné est constitué par une bande d'empilage (9) laquelle peut être allongée dans la direction de transport du fait qu'un châssis-support de bande (28) portant les poulies de renvoi (21, 22) est prévu avec du mou (23) pour permettre une conservation flexible de la tension de la bande et que l'extrémité réglable en hauteur du châssis-support (28) de la bande est articulée sur un dispositif de levage (17, 18), le point d'articulation étant guidé verticalement.

2. Dispositif selon la revendication 1, caractérisé en ce que le réglage en hauteur est réalisé au moyen d'une crémaillère (17) qui est entraînée par un moteur (18), la tête de la crémaillère étant reliée de manière orientable à l'extrémité de la bande d'empilage (9).

3. Dispositif selon la revendication 1 et/ou 2, caractérisé en ce que la bande d'empilage (9) se compose de l'installation de bande inférieure (19a) et de l'installation de bande supérieure (20a), le châssis-support de transporteur à rouleaux (28) communiquant avec le châssis-support de transporteur à rouleaux (33) par l'intermédiaire d'entretoises (33a), et que l'installation de bande inférieure (19a), repose avec son extrémité avant orientable autour de l'axe (22), sur un bâti de machine (30a) et, avec l'autre extrémité, sur la tête de crémaillère (17a) montée de manière orientable sur la crémaillère (17) laquelle est guidée dans une douille de guidage (17b) montée sur le bâti de machine (30a).

4. Dispositif selon l'une quelconque ou plusieurs des revendications 1 à 3, caractérisé en ce que le mou de bande (23) comprend une poulie de renvoi fixe (24) et une poulie de renvoi (27) montée sur un levier pivotant (26) de façon à pouvoir être déplacée en vainquant la force d'un ressort (25), que le levier pivotant (26) et la poulie de renvoi (24) sont montés sur le châssis-support de transporteur à rouleaux (28), que le châssis-support de bande inférieure (28) est divisé, de préférence dans la région de la poulie de renvoi (21) réglable en hauteur, à savoir de telle façon que la section de châssis-support (29) recevant la poulie de renvoi (21) est montée à l'intérieur du châssis-support (28) de façon à pouvoir coulisser dans le sens longitudinal et que la fixation est réalisée, de préférence, avec au moins deux barres (29a) qui peuvent coulisser dans des alésages correspondants de blocs (29b et 28b) et qui sont montées dans un bloc (29c).

**Claims**

1. Apparatus for the continuous stacking of square-shaped products from top to bottom, whereby products to be stacked are laid on top of one another and the stack is packaged and despatched, with a transporting means onto which the products (which are arranged behind one another) are continuously conveyed and are subsequently further transported up an inclined plane at the end of which inclined plane they are stacked, whereby the height of transportation of the inclined plane is altered by tilting according to the respective height of the stack, characterised in that the inclined plane is formed by a stacking belt (9) which is thus extendably arranged in the direction of transportation, that a belt frame (28) carrying the guide rollers (21, 22) is removably formed, a free end of the belt (23) is provided for flexibly maintaining the tension of the belt and that the vertically adjustable end of the belt frame (28) is hinged to a lifting device (17, 18) whereby the hinge point is directed vertically.

2. Apparatus according to claim 1, characterised in that the vertical adjustment is performed by means of a toothed rack (17) which is driven by a motor (18) whereby the head of the toothed rack is tiltably connected to the end of the stacking belt (9).

3. Apparatus according to claim 1 and/or 2, characterised in that the stacking belt (9) consists of the under-belt arrangement (19a) and the over-belt arrangement (20a) whereby the roller conveyor frame (28) is connected with the roller conveyor frame (33) over struts (33a) and the front end of the under-belt arrangement (19a) rests tiltably on a machine frame (30a) in the axis (22) and the other end rests on the tiltable head (17a) of the toothed rack (17), whereby the toothed rack (17) is led into a guide (17b) which is arranged on the machine frame (30a).

4. Apparatus according to one or more of claims 1 to 3, characterised in that the free end of the belt (23) consists of a fixed guide roller (24) and a guide roller (27) which is tiltable against the resilience of a spring (25) to a rocking lever (26), the rocking lever (26) and the guide roller (24) are positioned in the roller conveyor frame (28), the under-belt frame (28) is preferably subdivided and arranged in the region of the height adjusting guide roller (21), and certainly in such a way that the frame section (29) taking up the roller guide (21) is positioned longitudinally within the frame (28) movable backwards and forwards, and the arrangement results preferably with at least two bars (29a) which can glide into the corresponding boreholes of blocks (29b and 28b) and are arranged in a block (29c).

FIG. 1

FIG. 3

FIG. 2

FIG. 4

FIG. 5

FIG. 6

0019036